# EUROPÄISCHE PATENTANMELDUNG

(11) **EP 1 852 207 A2**
(43) Veröffentlichungstag der Anmeldung: **07.11.2007**
(21) Anmeldenummer: 07008947.9
(22) Anmeldetag: 03.05.2007
(51) Int. Cl.: B23K 11/16, B23K 11/26, B23K 35/00, B23K 101/18

(54) **Verfahren und Einrichtung zum elektrischen Kondensator-Entladungsschweissen**

(30) Priorität: 03.05.2006 DE 202006007166 U; 29.07.2006 DE 102006035147
(71) Anmelder: Lupotron GmbH, 86153 Augsburg (DE)
(72) Erfinder: Dr.Wolf, Arne, 86438 Kissing (DE)
(74) Vertreter: Ernicke, Klaus Stefan

(57) **Zusammenfassung**

Die Erfindung betrifft ein Verfahren und eine Einrichtung zum elektrischen Kondensator-Entladungsschweißen von dünnwandigen Blechen (12,13). Die Schweißeinrichtung (1) weist mindestens eine Impulsstromquelle (2), mehrere Zustellelektroden (4,5) und eine Zustelleinrichtung (20) für mindestens eine Elektrode (4,5) auf. Die Werkstücke (12,13) werden im Fügebereich (18) mit im wesentlichen parallelen Kontaktflächen (19) aneinander gelegt und mit dem über eine verkleinerte Strom führende Kontaktfläche zum Werkstück (12,13) geleiteten Entladungsstrom geschweißt.

## Beschreibung

Die Erfindung betrifft ein Schweißverfahren und eine Schweißeinrichtung zum elektrischen Impulsschweißen von Werkstücken mit den Merkmalen im Oberbegriff des Hauptanspruchs.

Aus der Praxis sind elektrische Impulsschweißeinrichtungen in Form von Kondensatorentladungs-Schweißeinrichtungen bekannt, die zum Schweißen von Werkstücken, insbesondere von dünnwandigen Blechen, Buckel in zumindest einem Blech für die Stromkonzentration benötigen. In Blechen werden derartige Buckel durch Bauteilverformung eingebracht. Um beim Impulsschweißen mit den zugestellten und beidseits an die Werkstücke angepressten Elektroden die Buckel nicht übermäßig zu verformen, wird bei 1 mm dicken Stahlblechen mit Elektrodenanpresskräften von ca. 1 kN gearbeitet. Die Elektroden haben stirnseitig Kontaktflächen zur Anlage an den Werkstücken und zur Einleitung des Schweißstromimpulses mit einer Flächengröße von ca. 400 mm². In der Praxis hat das Kondensatorentladungsschweißen das Problem, dass eine aufwändige Bauteilvorbereitung erforderlich ist, die einen entsprechend langen zeitlichen Vorlauf benötigt. Kurzfristige Änderungen der Schweißvorgaben sind dadurch nicht möglich. Die Bauteilverformungen und deren Lokalisierung stehen außerdem einem Einsatz des Kondensatorentladungsschweißens in Verbindung mit robotergeführten Schweißzangen entgegen.

Es ist Aufgabe der vorliegenden Erfindung, eine bessere Schweißtechnik aufzuzeigen.

Die Erfindung löst diese Aufgabe mit den Merkmalen im Hauptanspruch.
Die beanspruchte Schweißtechnik mit der Verschweißung von im wesentlichen parallelen Kontaktflächen der Werkstücke im Fügebereich erlaubt einen Verzicht auf aufwändige Bauteilvorbereitungen und insbesondere auf die bisher erforderlichen Schweißbuckel. Die Anorderungen an die Positioniergenauigkeit der Elektroden können verringert werden. Die Fügestellen können eine beliebige räumliche Lage haben. Dies macht die Schweißtechnik für bewegliche Schweißzangen und insbesondere für Roboteranwendungen tauglich.

Eine Schweißzange zum Entladungsimpulsschweißen kann in unterschiedlicher Weise ausgebildet sein. Vorteile ergeben sich hinsichtlich einer X-Zange mit schwenkbar gelagerten Zangenarmen, die eine besonders günstige Steuerung der Feder- und Massenverhältnisse erlaubt. Hierbei können auch über einen entsprechenden Antrieb beide Zangenarme relativ zueinander angetrieben und bewegt werden. Alternativ kann die Schweißzange als C-Zange oder in anderer Weise ausgebildet sein. Die Schweißzange kann mit federnden Zangenarmen und mit ein oder mehreren Zusatzmassen als Feder-Masse-Schwinger ausgebildet sein. Dies hat auch Vorteile beim Schweißen von konventionell vorbereiteten Werkstücken mit den Stromfluss konzentrierenden Buckeln, Ringen oder dgl..

Für einen Manipulator- oder Robotereinsatz ist das geringe Gewicht der Schweißzange günstig. Die Stromquelle kann komplett oder zumindest zu einem großen Teil stationär und getrennt von der Schweißzange angeordnet sein. Der Trafo kann ggf. an der Schweißzange angeordnet sein.

Für die Stromzuführung von der Stromquelle zu den Elektroden bzw. zu geeigneten Kontakten an den elektrisch leitfähigen Vorderarmen wird vorzugsweise eine flexible und induktionsarme Leitung eingesetzt. Hierdurch werden zusätzlich induktive Streuverluste vermieden. Das Spannungsniveau im Stromquellenbereich und im Arbeitsbereich an der Schweißzange kann dadurch niedrig gehalten werden. Die Leitungsführung ist auch günstig, um die Stromquelle komplett extern von der Schweißzange anordnen und die Schweißzange sowie den Manipulator entlasten zu können.

Die Verkleinerung der Strom führenden Kontaktflächen von mindestens einer oder auch mehreren Elektroden erleichtert das elektrische Entladungsimpulsschweißen von parallelen und insbesondere plan aneinander liegenden Werkstücken. Die zur Erwärmung der Werkstücke an der Fügestelle günstige Einschnürung der Schweißstroms kann durch die kleine Kontaktfläche oder Stromübergangsfläche erreicht werden. Die beanspruchte Schweißtechnik hat vor allem in Verbindung mit dem Kondensatorentladungsschweißen Vorteile. Die Werkstücke können zumindest im Fügebereich als dünnwandige Bleche ausgebildet sein. Durch die parallele und z.B. plane Kontaktlage der Werkstücke bzw. Bleche kann außerdem mit höheren Elektrodenanpresskräften von z.B. ca. 4 kN (z.B. für 1 mm dicke Stahlbleche) gearbeitet werden.

Besondere Vorteile bestehen bei Werkstücken oder Blechen aus metallischen Werkstoffen mit Oxidoberflächen. Die an den Kontaktstellen zwischen den Blechen bestehende Oxidschicht erhöht den Übergangswiderstand und sorgt für eine Temperaturerhöhung, die für die Schweißung günstig ist. Die an den außen liegenden Werkstückoberflächen befindliche Oxidschicht kann vor oder während des Schweißvorgangs entfernt werden, wodurch der Stromübergang von den Elektroden auf die Werkstücke verbessert wird. Die Schweißeeinrichtung kann hierfür eine Dreheinrichtung oder dergl. aufweisen, mit der über eine Bewegung der angepressten Elektroden die Oxidschicht zerstört und entfernt werden kann.

Die Werkstücke oder Bleche können mit einem flächigen Berührungskontakt direkt aneinander gelegt und in dieser Lage geschweißt werden. Diese Verbindungstechnik bringt beim CD-Schweißen überraschende Vorteile und unerwartet hohe Festigkeiten und Schweißqualitäten.

Es ist alternativ aber auch möglich, die Werkstücke unter Bildung eines distanzierenden Spalts und unter Einbringung einer verformbaren Masse im Spaltplan aufeinander zu legen und dann unter Druck der Elektroden und Verdrängung der Masse plan zusammen zu pressen und zu schweißen. Durch die kleine Strom führende Elektrodenfläche ist es möglich, die verformbare Masse, die z.B. ein elektrischer Isolator sein kann, an der Schweißstelle derart zu verdrängen, dass die Werkstücke in Strom leitenden Berührungskontakt gebracht werden können, der dann wieder ein Flächenkontakt ist und zu einem planen Verschweißen der Werkstücke führt. Die verdrängte Masse kann die Schweißstelle umgeben und gegen Umwelteinflüsse isolieren. Eine Verformung der Werkstücke ist auch bei diesem Schweißverfahren nicht erforderlich. Vielmehr besteht im Schweißbereich der erwähnte plane Flächenkontakt, der z.B. im wesentlichen die Größe der Strom führenden Kontaktfläche der verkleinerten Elektrode haben kann.

Die vorzugsweise plastisch verformbare Masse kann ein Bindemittel, insbesondere ein Klebemittel sein und zusätzlich die Festigkeit der Schweißstelle durch die Klebewirkung verstärken. Außerdem können mit einem Klebemittel die Werkstücke besser in Position gebracht und dort für den Schweißprozess gehalten werden.

Die Masse kann in beliebiger Weise aufgetragen werden. Bevorzugt wird ein raupenförmiger Auftrag, wobei alternativ linsenförmige Aufträge möglich sind. Die von der Masse bedeckte Auftragsfläche im Schweißbereich ist vorzugsweise kleiner als die Fläche der verkleinerten Strom führenden Elektrodenkontaktfläche. Dies erleichtert das Verdrängen der Masse beim Zusammenpressen aus dem Schweißbereich und die kontaktierende Berührung der Werkstücke für den Stromübergang und den Schweißprozess.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen:
- Figur 1:: eine Schweißeinrichtung mit zwei plan im Berührungskontakt aufeinander liegenden Werkstücken in Seitenansicht,
- Figur 2:: eine alternative Paarung von Elektroden und Werkstücken,
- Figur 3 und 4:: alternative Ausgestaltungen einer Elektrode,
- Figur 5 bis 7:: verschiedene Formgebungsvarianten der Elektrodenkontaktfläche,
- Figur 8:: eine Schweißeinrichtung mit zwei plan mit Spaltbildung und distanzierender Masse aufeinander liegenden Werkstücken in abgebrochener Seitenansicht,
- Figur 9:: eine Draufsicht auf die Schweißstelle von Figur 8,
- Figur 10:: eine Draufsicht auf eine Schweißanordnung mit mehreren Schweißstellen,
- Figur 11 und 12:: Varianten der Auftragform der Masse,
- Figur 13:: eine Schweißstation mit einem Roboter, einer Entladungsimpuls-Schweißzange, einer Stromquelle und einer induktionsarmen Leitungsverbindung,
- Figur 14 und 15:: zwei Varianten einer Entladungsimpuls-Schweißzange,
- Figur 16 und 17:: zwei Querschnittsvarianten der induktionsarmen Leitungsverbindung und
- Figur 18:: das Prinzipschaltbild eines Feder-Masse-Schwingers.

Die Erfindung betrifft eine Schweißeinrichtung (1) und ein Verfahren zum elektrischen Impulsschweißen von Werkstücken (12,13). Die elektrischen Schweißstromimpulse werden durch mindestens einen stoßweisen Entladungsvorgang erzeugt. Das Schweißverfahren wird als Entladungsimpulsschweißen bezeichnet. In der gezeigten und bevorzugten Ausführungsform ist die Schweißeinrichtung (1) als Kondensatorentladungs-Schweißeinrichtung ausstaltet, die nachfolgend abgekürzt als CD-Schweißeinrichtung bezeichnet wird. Der Schweißstromimpuls wird hierbei durch die elektrische Entladung eines Kondensators oder einer Kondensatorbatterie erzeugt. Alternativ kann ein anderes elektrisches Energiespeicherelement entladen werden.

Die Werkstücke (12,13) sind z.B. in der gezeigten Ausführungsform zumindest bereichsweise als dünnwandige Metallbleche ausgebildet, die aus beliebigen metallischen Werkstoffen, z.B. Stahl, Leichtmetalllegierungen oder dgl. bestehen können. Vorteilhaft sind z.B. Leichtmetallbleche, insbesondere Aluminiumbleche, aber z.B. auch hochfeste Stahlbleche. Die Blechstärken können bei ca. 5 mm oder darunter liegen. Ein bevorzugter Blechstärkenbereich liegt zwischen ca. 0,4 mm und ca. 2 mm, z.B. bei ca. 1,5 mm. Die Bleche (12,13) können an der Oberfläche eine Oxidschicht aufweisen.

Die Werkstücke (12,13) können aus verformten Blechen bestehen und z.B. Tiefziehteile, Pressteile und insbesondere Rohkarosseriebauteile sein. Sie können ferner nur bereichsweise und insbesondere im Fügebereich (18) eine dünnwandige Formgebung aufweisen und in den anderen Bereichen eine andere, z.B. massivere Gestalt, haben. Zum Fügen und Verschweißen können z.B. Randflansche vorhanden sein.

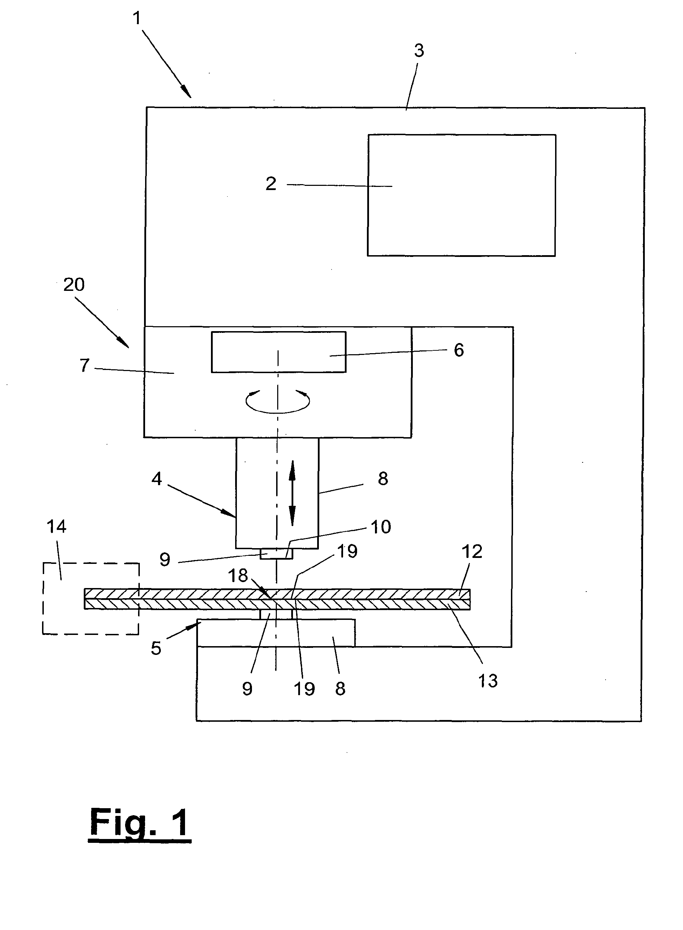

Bei der nachfolgend zur Ausführungsform von Figur 1 bis 7 beschriebenen elektrischen Entladungsimpulsschweißtechnik können die Werkstücke (12,13) im Fügebereich (18) und ggf. auch in anderen Bereichen mit im wesentlichen parallelen Werkstück-Kontaktflächen (19) aneinander gelegt und mit dem Entladungsstrom geschweißt werden. Die Kontaktflächen (19) können eben bzw. plan oder gekrümmt sein. Sie können mit Berührungskontakt in beliebiger räumlicher Lage aneinander oder aufeinander liegen. Auf die beim CD-Schweißen bislang üblichen den Stromfluss konzentrierenden Mittel, z.B. Buckel, Ringe, Werkstückansätze oder - verformungen im Füge- oder Schweißbereich (18) kann verzichtet werden. Für die Bereitstellung und Positionierung der Werkstücke (12,13) zum Schweißen kann eine in Figur 1 schematisch angedeutete Halteeinrichtung (14) vorhanden sein.

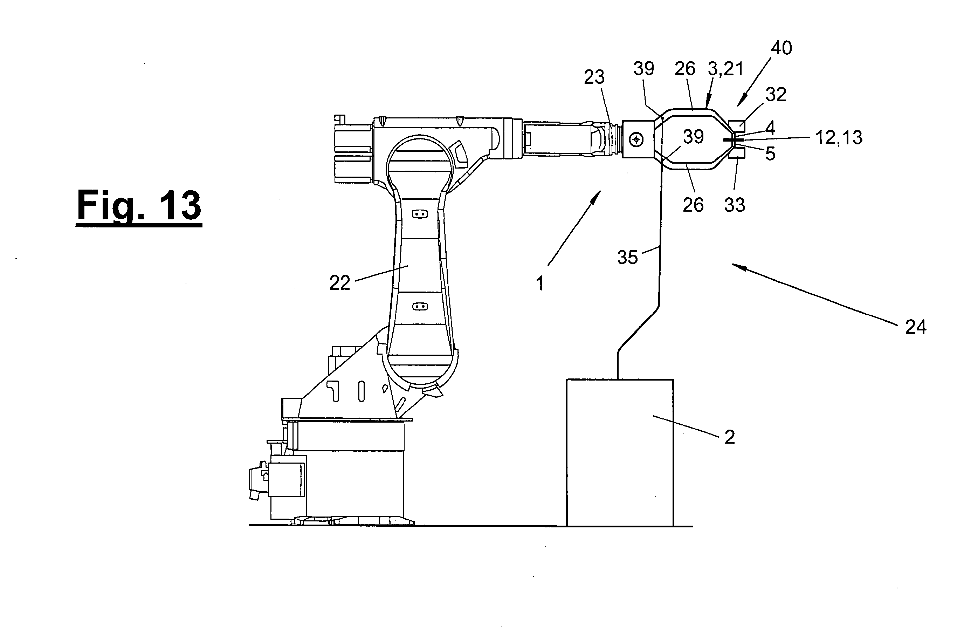

Die Schweißeinrichtung (1) ist in den Ausführungsformen von Figur 1 und 13 als Kondensatorentladungs-Schweißeinrichtung, nachfolgend CD-Schweißeinrichtung, ausgebildet und besitzt ein Gestell (3), welches z.B. in der Variante von Figur 1 als stationäres ständerartiges und C-förmiges Gestell ausgebildet ist. Alternativ kann das Gestell (3) in der Ausführungsform von Figur 13 instationär und z.B. als bewegliche Schweißzange (21) (z.B. X-Zange oder C-Zange) ausgestaltet sein. Eine solche Schweißzange kann manuell geführt oder mit der Hand (23) eines Manipulators (22), insbesondere eines mehrachsigen Industrieroboters, verbunden werden. Der Manipulator (22) kann z.B. ein sechsachsiger Gelenkarmroboter mit einer mehrachsigen Roboterhand (23) sein.

Die Schweißeinrichtung (1) besitzt mindestens eine elektrische Stromquelle (2) zur Erzeugung des elektrischen Entladungsimpulsstroms. Dies ist z.B. eine Kondensatorentladungs-Stromquelle (nachfolgend CD-Stromquelle genannt). Alternativ kann die Impulsstromquelle eine andere Entladungsstromquelle sein. Die Stromquelle (2) ist mit zwei oder mehr Elektroden (4,5) verbunden, die mit den Werkstücken (12,13) vorzugsweise an gegenüberliegenden Seiten in Kontakt gebracht und an die Werkstücke (12,13) angepresst werden können.

Die Entladungsstromquelle oder CD-Stromquelle (2) kann an ein mehrphasiges Netz angeschlossen sein. Die drei Netzphasen speisen über eine entsprechende dreiphasige Thyristorschaltung spannungsgeregelt einen Netztransformator, der die Netzspannung hochtransformiert, z.B. auf einen Wert von ca. 3 kV. Der Netztransformator ist über ohmsche Widerstände mit einer Gleichrichterschaltung verbunden, über welche die Ladung von mindestens einer Kondensatorbatterie erfolgt. Die Kondensatorbatterie ist primärseitig an einen Impulstransformator angeschlossen, an den sekundärseitig die Elektroden (4,5) angeschlossen sind. Die Kondensatorentladung und die Bereitstellung des Schweißstromimpulses erfolgen, wenn die Kondensatorbatterie auf einen vorparameterisierten Wert aufgeladen ist und die zu verschweißenden Werkstücke (12,13) über die Elektroden (4,5) mit einer voreingestellten Kraft F zusammengepresst werden. Ein Auslöseimpuls einer Steuerung der Schweißeinrichtung (1) steuert den Thyristor an, wobei die in der Kondensatorbatterie gespeicherte Energie stoßartig in den Impulstransformator entladen wird. Dabei wird die primäre netzseitige Hochspannung in eine sekundäre, sehr viel niedrigere Spannung umgewandelt. Das Verhältnis der primärseitigen zur sekundärseitigen Spannung ist durch das Übersetzungsverhältnis Ü des Sekundärtransformators oder Impulstransformators zum Netztransformator bestimmt.

Durch mindestens einen über die Elektroden (4,5) durch die Werkstücke (12,13) geleiteten Stromimpuls, der z.B. eine Dauer von ca. 10 bis 30 ms hat, werden die Werkstücke (12,13) an der Fügestelle (18) und an der gegenseitigen Kontaktfläche (19) teigig und gehen eine Schweißverbindung ein. Die mit dem Schweißstromimpuls übertragene Leistung kann sehr hoch sein und bis in den Megawatt-Bereich reichen.

Wahlweise können ein oder mehrere Stromimpulse erzeugt und für den Schweißprozess oder einen Begleitprozess, z.B. zum Vor- und/oder-Nachwärmen oder dgl., an der Fügestelle (18) eingesetzt werden. Die Schweißstromimpulse können mit Abstand nacheinander erzeugt werden. Bei Einsatz mehrerer entsprechend gesteuerter Kondensatorbatterien oder mehrerer Stromquellen (2) können mehrere Schweißstromimpulse gleichzeitig oder kurz hintereinander, ggf. auch mit zeitlicher Überlappung, erzeugt und durch die Werkstücke (12,13) geleitet werden.

Zumindest eine der beteiligten Elektroden (4,5) der Schweißeinrichtung (1) besitzt eine verkleinerte stromführende Elektroden-Kontaktfläche (10) für den Kontakt zum Werkstück (12,13) und für die Einleitung des Schweißstromimpulses. Sie ist kleiner als beim konventionellen Kondensatorentladungs-Schweißen. Die Form und Größe der Kontaktfläche (10) kann auch die Form und Größe des Schweißbereichs (18) und der Kontaktfläche beeinflussen, an der sich die Werkstücke (12,13) unter ausreichendem Druck berühren und eine Schweißverbindung eingehen. Die Flächen (10,18) können z.B. im wesentlichen die gleiche Form und Größe haben.

Die Flächengröße der stromleitenden Kontaktfläche (10) liegt z.B. bei ca. 35 mm² oder kleiner. Bevorzugt wird eine Kontaktflächengröße von ca. 28 mm² oder kleiner. Die Kontaktfläche (10) oder Stromübergangsfläche kann plan oder gewölbt sein und ist z.B. quer zur Elektrodenlängsachse und zur Zustell- oder Anpressrichtung ausgerichtet. Bei nicht ebenen Werkstück-Kontaktflächen (19) kann zumindest eine Elektrode (4,5) eine entsprechende, ebenfalls nicht ebene Form haben.

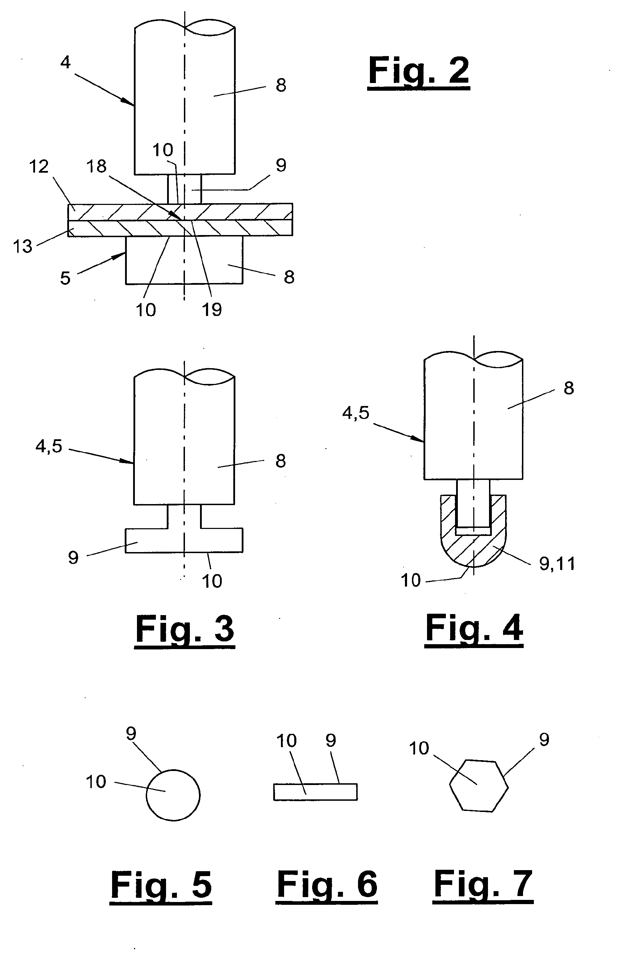

Die Elektroden-Kontaktfläche (10) kann z.B. eine im wesentlichen kreisrunde Umriss-Kontur haben und besitzt vorzugsweise einen Durchmesser von ca. 6 mm oder kleiner. Figur 5 zeigt eine solche Kontaktflächenform. Die Kontaktfläche (10) kann im Umriss alternativ prismatisch oder oval ausgebildet sein. Sie kann hierbei gemäß Figur 7 eine im wesentlichen punktförmige Gestaltung, hier als Sechseck, haben. Sie kann alternativ gemäß Figur 6 auch streifenförmig oder balkenförmig bzw. rechteckig ausgebildet sein. Hierbei kann sie in weiterer Variation eine Wellenform besitzen. Bei einer länglichen Kontaktflächenform sind die Längen- und Breitenabmessungen auf die gewünschte Kontaktflächengröße abgestimmt.

In der Ausführungsform von Figur 1 haben die Elektroden (4,5) gleich große Kontaktflächen. In der Variante von Figur 2 sind die Kontaktflächen (10) unterschiedlich groß, wobei z.B. die eine und hier obere angetriebene Elektrode (4) die besagte kleine Kontaktfläche (10) aufweist. Die untere stationäre Elektrode (5) hat eine größere Kontaktfläche (10). Die Elektroden (4,5) können gleiche oder unterschiedliche Umrissformen aufweisen.

Bei unterschiedlich großen Elektroden (4,5) ist die kleinere Elektrode (4) z.B. die bewegte und mit der Zustelleinrichtung (20) angepresste Elektrode und ist als Pluspol im Entladungsstromkreis geschaltet. Die größere Elektrode (5) ist stationär oder relativ ortsfest am Gestell (3) angeordnet und als Minuspol geschaltet. Diese Anordnung kann auch für die Schweißzange (21) von Figur 13 bis 18 gelten, wobei die kleinere Elektrode (4) am zugestellten Zangenarm angeordnet ist.

Die Elektroden (4,5) können in beliebiger Weise ausgebildet sein. In den gezeigten Ausführungsformen besitzen sie einen Elektrodenschaft (8), der z.B. eine zylindrische Form hat. Stirnseitig und z.B. zentrisch ist am Elektrodenschaft (8) ein verjüngter bzw. verkleinerter Elektrodenkopf (9) mit der Kontaktfläche (10) angeordnet und ragt über das Schaftende vor. Der Übergang vom Elektrodenschaft (8) auf den verjüngten Elektrodenkopf (9) kann stufenförmig abgesetzt oder konisch ausgebildet oder in beliebiger anderer Weise gestaltet sein. Figur 1 und 2 zeigen abgestufte Formgebungen.

In der Variante von Figur 3 hat der Elektrodenkopf (9) eine hammerkopfartige längliche Form und besitzt eine Kontaktfläche (10), die z.B. gemäß Figur 6 streifenförmig oder rechteckig ausgebildet ist. Am Übergang zum Elektrodenschaft (8) kann eine Verjüngung oder Einschnürung vorliegen.

In der Variante von Figur 4 hat die Elektrode (4,5) eine ggf. wechselbare Elektrodenkappe (11). In diesem Fall besitzt der Elektrodenschaft (8) einen stirnseitigen zentralen Vorsprung oder Zapfen, auf den die Elektrodenkappe (11) mit einer Aufnahmeöffnung aufgesteckt ist. Die Elektrodenkappe (11) bildet den Elektrodenkopf (9) und besitzt eine stirnseitige Kontaktfläche (10), die verrundet oder konisch verjüngt sein kann. Über die Rundung bzw. die Verjüngung ergibt sich die gewünschte kleine Kontaktflächengröße. Die Elektrodenkappe (11) kann aus einem geeigneten Werkstoff, z.B. einer Legierung mit Kupfer-Zirkonium, Wolfram oder Beryllium, bestehen, die ein Anlegieren oder Ankleben am Werkstück (12,13) verhindert.

Der Elektrodenkopf (9) und der Elektrodenschaft (8) können stromleitend verbunden sein, wobei der Elektrodenschaft (8) an die Stromquelle (2) angeschlossen ist. Alternativ kann der Elektrodenkopf (9) an die Stromquelle (2) angeschlossen sein. Die Elektroden (4,5) können einteilig ausgeführt sein. Alternativ ist eine mehrteilige Ausführung möglich, wobei der Elektrodenkopf (9) und der Elektrodenschaft (8) fest oder lösbar miteinander verbunden sein können.

Bei der in Figur 1 gezeigten Ständermaschine besitzt die Schweißeinrichtung (1) eine Zustelleinrichtung (20) für eine oder mehrere Elektroden (4,5). Die Zustelleinrichtung (20) kann in beliebiger Weise ausgebildet sein. In der gezeigten Ausführungsform betätigt sie die obere Elektrode (4), wobei die untere Elektrode (5) am Gestell (3) ortsfest angeordnet ist. Die Zustelleinrichtung (20) besitzt z.B. eine mit einem entsprechenden steuerbaren Antrieb und ggf. mit einer Nachsetzeinrichtung versehene Vorschubeinrichtung (7), welche die Elektrode (4) in deren Längsrichtung an das Werkstück (12) zustellt und mit der gewünschten Kraft F anpresst. Die Elektrodenanpresskraft F kann höher als beim CD-Schweißen mit Schweißbuckeln sein und über z.B. 2 kN liegen. Sie kann z.B. ca. 4 kN betragen.

Nachfolgend werden drei Ausführungsbeispiele für Kondensatorentladungs-Schweißungen angegeben, bei denen jeweils Bleche (12,13) aus rostfreiem Stahl und mit gleichen Blechstärken unter Einsatz von zwei gleich großen Elektroden (4,5) mit jeweils einem Durchmesser von 6 mm der Elektroden-Kontaktflächen (10) geschweißt wurden:
1. Beispiel
   Bleckstärken 0,4 mm, Elektrodenanpresskraft F 3,4 kN, Schweißenergie E 0,3 kJ, Schweißzeit ca. 20 ms.
2. Beispiel
   Blechstärken 1,5 mm, Elektrodenanpresskraft F 3,4 kN, Schweißenergie E 1,6 kJ, Schweißzeit ca. 20 ms.
3. Beispiel
   Bleckstärken 0,8 mm, Elektrodenanpresskraft F 2,8 kN, Schweißenergie E 0,8 kJ, Schweißzeit ca. 20 ms.

Die Festigkeit der Schweißverbindung war in allen Fällen höher als diejenige der umgebenden Werkstückbereiche. Gleichwertige Ergebnisse zeigen sich, wenn eine der Elektroden (4,5) einer größere Elektroden-Kontaktfläche (10) aufweist.

Die Zustelleinrichtung (20) kann ferner eine Dreheinrichtung (6) aufweisen, mit der die Elektrode (4) um ihre Längsachse kontinuierlich oder reversierend bzw. oszillierend gedreht werden kann. Diese Drehung kann unter Presskontakt der Elektroden-Kontaktflächen (10) am Werkstück (12) ausgeführt werden und zerstört über Reibschluss die dortige Oxidoberfläche für die Verbesserung des Stromübergangs. Alternativ kann die Dreheinrichtung (6) als Rütteleinrichtung oder dergl. ausgebildet sein, um die Oxidoberfläche auf andere Weise mechanisch an der Fügestelle zu zerstören und zu entfernen.

Die Schweißeinrichtung (1) besitzt eine geeignete Steuerung (nicht dargestellt) an welche die Stromquelle (2) und die Zustelleinrichtung mit ihren Komponenten angeschlossen sind.

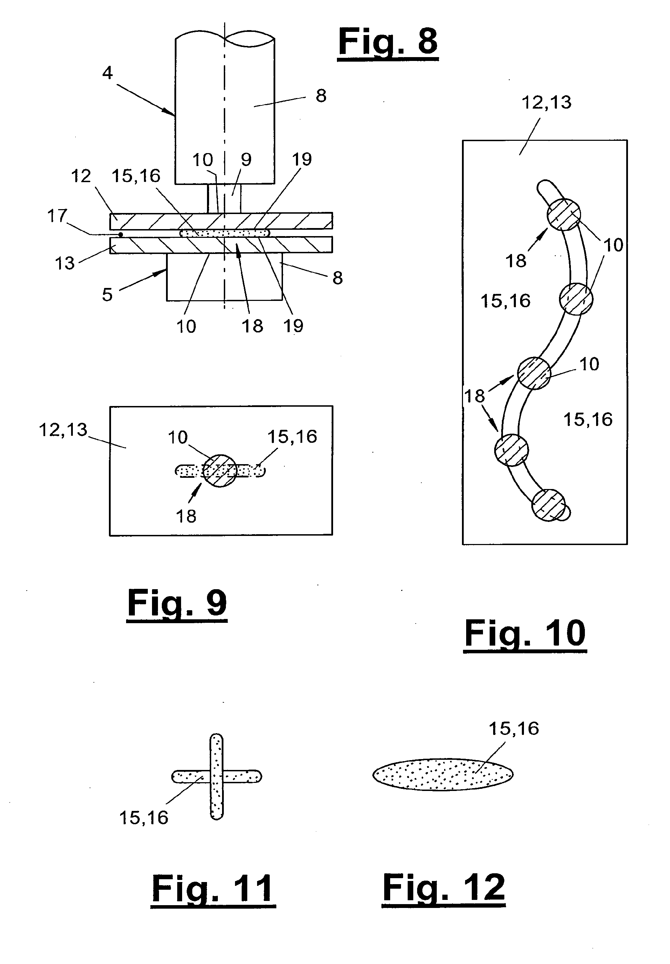

In Figur 8 bis 12 ist ein zweites Ausführungsbeispiel des Schweißverfahrens und der Impuls-Schweißeinrichtung (1), insbesondere der CD-Schweißeinrichtung dargestellt.

In dieser Variante werden die Werkstücke (12,13) unter Bildung eines distanzierenden Spalts (17) an der Fügestelle (18) zwischen ihren späteren Kontaktflächen (19) im wesentlichen parallel aneinander gelegt. Im Spalt (17) ist eine verformbare Masse (15) angeordnet und befindet sich zumindest teilweise im Schweiß- und Fügebereich (18). Die Masse (15) kann vor dem Zusammenbringen der Werkstücke (12,13) auf eines der Werkstücke, z.B. das untere Werkstück (13), in geeigneter Weise aufgebracht werden.

Beim Schweiß- und Fügeprozess werden die Werkstücke (12,13) aus der in Figur 8 gezeigten Ausgangsstellung unter dem Druck der einander angenäherten Elektroden (4,5) aufeinander zubewegt und plan verpresst. Hierbei wird die Masse (15) seitlich verdrängt und insbesondere auch aus dem Schweißbereich (18) verdrängt. In diesem Schweißbereich (18) können die wiederum im wesentlichen ohne Werkstückverformung zusammengepressten Werkstücke (12,13) mit ihren Kontaktflächen (18) gegenseitig angenähert werden und sich flächig berühren und an dieser Berührungsstelle verschweißt werden. Die Berührungsstelle kann z.B. im wesentlichen so groß wie die Stirnfläche bzw. die verkleinerte Strom führende Kontaktfläche (10) der Elektrode (4) sein.

Die Masse (15) kann elektrisch isolierende Eigenschaften haben und aus einem entsprechend geeigneten Werkstoff bestehen. Sie enthält keine metallischen Schweißzusatzstoffe und keine Partikel, die an der Schweißverbindung der Werkstücke teilnehmen.

Die Masse (15) kann eine für die Verformung und Verdrängung geeignete Konsistenz haben und z.B. pastös oder zähflüssig sein. Die Masse (15) kann ferner klebende oder haftende Eigenschaften haben und zu diesem Zweck als Klebemittel oder Bindemittel ausgebildet sein. Das Klebemittel kann thermisch aushärtend sein und durch die beim CD-Schweißen eingebrachte Wärme zumindest bereichsweise aushärten. Ggf. wird das Klebemittel auch im Bereich rund um die Schweißstelle (18) verbrannt oder verdampft. Als Klebemittel eignen sich z.B. Epoxydkleber, die eine besonders hohe Zug- und Dehnfestigkeit sowie Scherfestigkeit und einen hohen E-Modul haben. Derartige thermisch aushärtende Kleber sind als Strukturklebstoffe im Autobau bekannt.

Die Masse (15) kann in einer beliebig geeigneten Weise und Form aufgetragen werden. Vorzugsweise bildet sie eine zumindest für die Spaltbildung ausreichend formstabilen Auftragskörper (16). In der gezeigten Ausführungsform wird die Masse (15) in einer Raupenform (16) aufgetragen. Die Raupe (16) kann eine längere und durchgehende Raupenlinie bilden. Sie kann alternativ unterbrochen sein.

Die Raupe (16) kann je nach Art der Masse (15) und ihrer plastischen Eigenschaften eine unterschiedliche Höhe aufweisen. Für eine Kleberaupe sind z.B. Höhen zwischen 2 und 8 mm im unbelasteten Auftragzustand möglich. Alternativ zur Raupenform kann der Auftragkörper (16) eine andere Formgebung, z.B. als dünne Beschichtung von einer Schichtdicke von weniger als 1mm, z.B. 0,5 mm haben. Eine solche Beschichtung, die wiederum als Klebeschicht oder in anderer Weise ausgebildet sein kann, lässt sich z.B. mit einem Tampon- oder Siebdruck aufbringen. Ferner ist ein Strahlauftrag möglich. Dies kann z.B. ein Sprühstrahl oder ein sogenannter Spinnstrahl, d.h. ein spiralförmig fortschreitender Auftragsstrahl sein. Daneben kann der Auftragkörper (16) weitere beliebig geeignete Formen haben.

In der Ausführung von Figur 8 und 9 ist z.B. eine gerade und im wesentlichen zylindrische Raupe (16) aufgetragen worden, die im Spalt (17) bei Auflage der Bleche (12,13) etwas zusammen gedrückt wird. Die Raupe (16) befindet sich im Bereich der Schweißstelle (18) und kann sich über diese ein- oder beidseitig hinaus erstrecken. Die Masse (15) und die Raupe (16) haben im Schweißbereich (18) z.B. eine Flächenerstreckung, die kleiner als die vorgesehene Schweißstelle (18) und kleiner als die verkleinerte Strom führende Kontaktfläche (10) Elektrode (4) ist. Insbesondere ist die Raupe (16) schmäler als die Schweiß- oder Kontaktfläche (10,18).

In Figur 10 ist eine Variante dargestellt, in der die Werkstücke (12,13) durch mehrere Schweißstellen oder Schweißpunkte miteinander verbunden werden. Diese Schweißstellen oder Schweißpunkte können in beliebiger Weise verteilt sein und z.B. in einer geraden oder gebogenen Linie liegen. Die Masse (15) bzw. die Raupe (16) kann dieser Linienerstreckung folgen. In Figur 10 ist z.B. eine einzelne durchgängige Raupe (16) vorgesehen, die sich durch alle Schweißbereiche (18) hindurch erstreckt und hier wiederum schmäler als die Schweiß- oder Kontaktfläche (18,10) ist.

Die gleiche oder eine andere Masse (15) kann auch an weiteren Stellen außerhalb des oder der Schweißbereiche (18) zwischen den Werkstücken (12,13) und im Spalt (17) vorhanden sein.

Figur 11 und 12 zeigen Varianten der Auftragsform bzw. des Auftragskörpers (16). In Figur 11 sind z.B. zwei Raupen (16) kreuzweise übereinander gelegt. In Figur 12 hat die Masse (15) in der Draufsicht eine elliptische oder anderweitig verdickte Form. Sie kann auch eine kreisrunde und mehr punktflächenförmige Form haben.

Figur 13 zeigt in einer schematischen Darstellung eine Schweißstation (34) mit einer Variante der Schweißeinrichtung (1) zum elektrischen EntladungsImpulsschweißen von Werkstücken (12,13), die in einer beliebigen räumlichen Lage gehalten und gespannt sein können.

Die Schweißeinrichtung (1) beinhaltet hier zumindest eine Schweißzange (21) oder sog. CD-Schweißzange mit ein oder mehreren Elektroden (4,5), die über eine entsprechende flexible und vorzugsweise induktionsarme Leitung (35) an eine Schweißstromquelle (2) für den elektrischen Entladungs-Impulsstrom angeschlossen sind.

Die Werkstücke (12,13) werden in der vorbeschriebenen Art im Fügebereich (18) mit im wesentlichen parallelen Kontaktflächen (19) aneinander gelegt und mit dem Entladungsimpulsstrom geschweißt. Die Elektroden (4,5) sind ebenfalls in der vorbeschrieben Art ausgebildet und besitzen die genannte kleine Kontaktfläche oder Stromübergangsfläche.

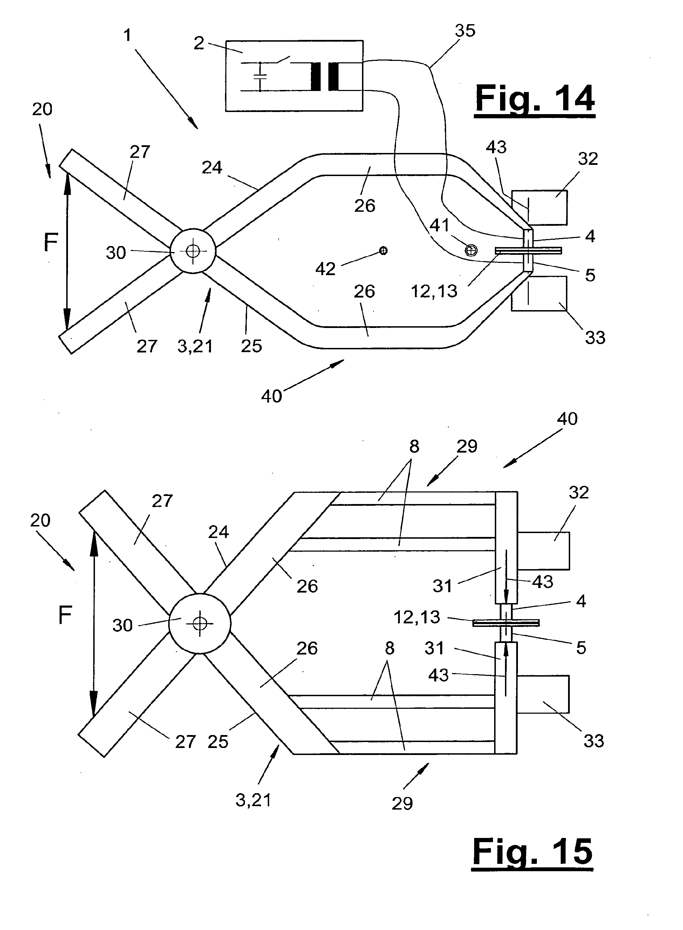

Die Schweißstromquelle (2) kann Bestandteil der Schweißeinrichtung (1) sein. Sie kann alternativ eine getrennte Komponente darstellen und kundenseitig bereits vorhanden sein, so dass zum Liefer- und Schutzumfang nur die nachfolgend erläuterte Schweißzange (21) gehört. Die Schweißstromquelle (2) erzeugt in der vorbeschriebenen Weise einen elektrischen Entladungs-Impulsstrom durch Kondensatorentladung oder auf andere geeignete Weise. Wie in Figur 14 angedeutet, kann dem Kondensator oder der Kondensatorbatterie ein Transformator nachgeschaltet sein, welcher die Kondensatorspannung von z.B. ca. 3.000 V auf eine Schweißspannung von z.B. ca. 40 bis 80 V herunter transformiert und Schweißströme von z.B. ca. 20 bis 30 kA ermöglicht. Die ist in der gezeigten Ausführungsform mit allen Bestandteilen stationär und extern angeordnet und mit der Schweißzange (21) über eine elektrische Leitung (35) verbunden. Alternativ können Teile der Schweißstromquelle (2), z.B. der Transformator, an der Schweißzange (21) angeordnet sein.

Die Schweißzange (21) weist mindestens einen Zangenarm (24,25) auf. Vorzugsweise sind mindestens zwei gegenseitig wirkende Zangenarme (24,25) vorhanden. In der gezeigten Ausführungsform ist die Schweißzange (21) als X-Zange mit z.B. einer im wesentlichen symmetrischen Gestalt ausgebildet, bei der die Zangenarme (24,25) über ein Gelenk (30) miteinander verbunden und schwenkbar gelagert sind. Alternativ können die Zangenarme (24,25) an einem Traggestell über getrennte Gelenke schwenkbar gelagert sein.

Die Zangenarme (24,25) können eine mehrfach abgewinkelte, bügelartige Form haben und aus Vorderarmen (26) bestehen, welche jeweils mindestens eine Elektrode (4,5) tragen und jenseits des Gelenks (30) angeordnet sind. Die zugehörigen Hinterarme (27) befinden sich auf der anderen Gelenkseite und sind gegeneinander gespreizt. In diesem Bereich kann eine geeignete Zustelleinrichtung (20), z.B. ein motorischer Antrieb (nicht dargestellt) zum Öffnen und Schließen der Schweißzange (21) angreifen, dessen Schließkraft durch den Pfeil F symbolisiert wird. Dieser Antrieb kann ein manueller Antrieb oder ein maschineller Antrieb mit einem Motor oder einem anderen Antriebselement sein.

Die Schweißzange (21) ist leichtgewichtig ausgebildet und hat ein so geringes Gewicht, dass sie von Menschenhand oder von dem in Figur 13 gezeigten Manipulator (22) geführt und betätigt werden kann. Der Manipulator (22) kann in der vorerwähnten Weise ausgebildet sein. Er kann alternativ ein anderes ein- oder mehrachsiges Führungsgerät sein.

Die Schweißzange (21) weist ein oder mehrere geeignete Anschlüsse zum Bedienen und Führen der Schweißzange (21) auf. Diese können an beliebig geeigneter Stelle angeordnet sein, z.B. am Gelenk (30) oder an einem der Hinterarme (27). Dieser Anschluss kann ein Handgriff für eine manuelle Bedienung oder eine Anschlussplatte für die Verbindung mit einem Abtriebs- und Führungsteil (23) des Manipulators (22), z.B. der mehrachsigen Roboterhand, sein.

Die Zustellvorrichtung (20) bzw. deren Antrieb zum Öffnen und Schließen der Schweißzange (21) kann ein separater Antrieb, z.B. ein Pneumatik- oder Hydraulikzylinder oder auch ein elektromotorischer Antrieb sein, der mit einer Steuerung der Schweißeinrichtung (1) verbunden ist. Diese Prozesssteuerung steuert die Zangenbewegungen und den Schweißstrom. Sie kann separat angeordnet oder in eine andere Steuerung, z.B. in die Robotersteuerung, integriert sein.

Die Schweißzange (21) weist zumindest einen federelastischen Vorderzangenarm (26) auf, der entsprechend schlank und leichtgewichtig ausgebildet sein kann und eine niedrige Federkonstante aufweisen kann. Die Hinterarme (27) können biegesteif zur Aufnahme und Übertragung der Antriebskräfte ausgebildet sein.

An den Zangenarmen (24,25) sind an deren Endbereich und z.B. in der Nähe der Elektroden (4,5) jeweils ein oder mehrere Massenansammlungen oder Massenkonzentrationen angeordnet, die nachfolgend als Zusatzmassen (32,33) bezeichnet werden. Die Zusatzmassen (32,33) können in Zustellrichtung (43) der Elektroden (4,5) unmittelbar hinter den Elektroden (4,5) angeordnet sein. Sie können alternativ weiter entfernt angeordnet sein.

Es ist günstig, wenn zwischen den Elektroden (4,5) und der zugeordneten Zusatzmasse (32,33) eine steife Verbindung besteht. Insbesondere können die Elektroden (4,5) und die zugehörigen Zusatzmassen (32,33) in Zustellrichtung (43) im wesentlichen fluchtend hintereinander liegen und durch ein abgewinkeltes und in Zustellrichtung (43) sich erstreckendes Kopfteils des Vorderarms (26) miteinander verbunden sein.

Die Zusatzmassen (32,33) können ggf. gelöst, gewechselt oder verändert werden und bestehen z.B. aus anmontierbaren Platten oder anderen Gewichtsteilen. Alternativ können die Zusatzmassen (32,33) in die Vorderarme (26) integriert und als Massenvergrößerungen, z.B. Armverdickungen oder dergleichen, im Bereich der Elektroden (4,5) gestaltet sein. Auch die Masse der Elektroden kann vergrößert sein, um die Zusatzmasse (32,33) zu bilden.

Die Größe der Zusatzmassen (32,33) ist wählbar. Ihre Masse kann insbesondere gleich oder größer als die Masse der Vorderarme (26) sein. Die Massenverteilungwird z.B. derart gewählt, dass der resultierende Massen-Schwerpunkt (41) in der Nähe der Elektroden (4,5) liegt. Der Schwerpunkt (41) befindet sich insbesondere im Bereich zwischen der geometrischen Mitte (42) der Vorderarme und den Elektroden (4,5).

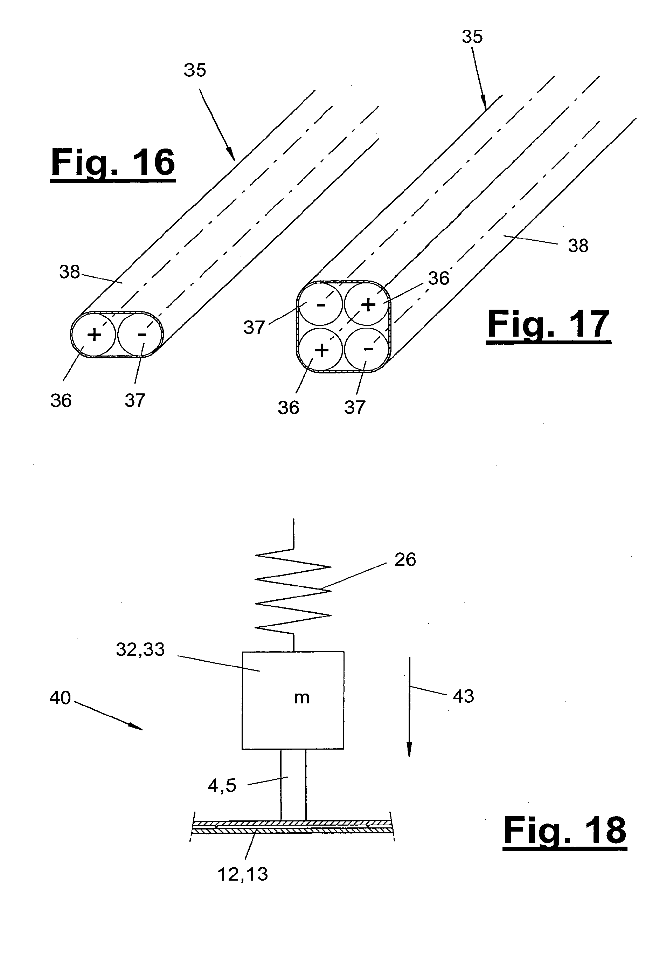

Die Schweißzange (21) kann mit ihren federelastischen Vorderarmen (26) und den Zusatzmassen (32,33) ein Feder-Masse-Schwingsystem (40) zur Bewegung der Elektrode (4,5) bilden, wie es in Figur 18 als Prinzipschaltbild dargestellt ist.

Die Massengröße der Zusatzmassen (32,33) und der Vorderarmmassen sowie die Federkonstanten der Vorderarme (26) werden derart aufeinander abgestimmt, dass die Resonanzfrequenz des Schwingsystems kleiner als bei normalen steifen Schweißzangen ist, wie sie z.B. zum elektrischen Punktschweißen eingesetzt werden. Es wird eine Resonanzfrequenz von weniger als 1000 Hz angestrebt. Günstig ist eine Resonanzfrequenz von weniger als 500 Hz, vorzugsweise weniger als 200 Hz. In der bevorzugten Ausführungsform wird die Abstimmung von Massen und Federkonstanten so gewählt, dass die Resonanzfrequenz im Bereich zwischen 5 und 100 Hz liegt. In die Berechnungsformel der Resonanzfrequenz gehen Federkonstante und Masse als Wurzel aus der Division von Federkonstante durch Masse ein.

Die Federkonstante der Vorderarme (26) wird andererseits so groß gewählt, dass die benötigte Anpresskraft der Elektroden (4,5) am Werkstück (12,13) aufgebracht werden kann.

Beim Entladungsimpulsschweißen, insbesondere beim Kondensatorentladungsschweißen, erfolgt der Schweißvorgang innerhalb weniger Millisekunden. Sowohl die Erwärmung als auch die Abkühlung und die damit verbundene Erweichung der Schweißteile oder Werkstücke (12,13) erfolgen ebenfalls in dieser zeitlichen Größenordnung. Für die Qualität der Schweißung ist eine Abstimmung des zeitlichen Verlaufs der Temperaturentwicklung und Erweichung günstig. Beim Schließen der Schweißzange (21) werden die Elektroden (4,5) mit Kraft gegen die Werkstücke (12,13) gepresst, wobei die Vorderarme (26) federnd gespannt werden. Beim Erweichen der Schweißstelle folgen die Elektroden (4,5) durch diese Federspannung der Erweichung und evtl. Annäherung der Werkstücke (12,13) in einer Nachsetzbewegung. Durch die niedrige Federkonstante und die Massenerhöhung über die Zusatzmassen (32,33) wird erreicht, dass die Elektroden (4,5) dem Erweichungsvorgang nicht zu schnell folgen, sondern mit einem bestimmten Zeitverlauf und einer Verzögerung, welche der Erweichung des Materials entspricht.

Günstig kann sich außerdem die Massenkonzentration im Bereich der Elektroden (4,5) auswirken. Dies führt zu einer großen Massenträgheit im Elektrodenbereich, die ein Zurückprellen der Elektroden (4,5) verhindert und die Elektrodenanpresskraft aufrecht erhält. Dies ist insbesondere beim Anlegen des Impulsstroms vorteilhaft und wirkt dem oder den Werkstück(en) (12,13) dämpfend entgegen.

Figur 15 zeigt eine Variante der Schweißzange (21) und der Gestaltung der Vorderarme (26). In dieser Variante sind die Zusatzmassen (32,33) an Elektrodenhaltern (31) lösbar oder ggf. verstellbar befestigt. Die Elektrodenhalter (31) tragen die Elektroden (4,5) und erstrecken sich im wesentlichen in Zustellrichtung (43) der Elektroden bzw. in Schließrichtung der Zange (21) und haben vorzugsweise eine hohe Steifigkeit. Die Vorderarme (26) können zusätzliche Federelemente zur Herabsetzung der Federkonstante aufweisen. Figur 15 zeigt hierfür eine Gestaltungsmöglichkeit, wobei der Frontbereich der Vorderarme (26) jeweils aus zwei oder mehr dünnen und federelastischen Auslegern (28) besteht, die parallel zueinander angeordnet und im wesentlichen quer zur Zustellrichtung (43) bzw. der Zangenschließrichtung ausgerichtet sind. Die Ausleger (28) sind am frontseitigen Ende mit den Elektrodenhaltern (31) und am rückwärtigen Ende mit dem hinteren Vorderarmbereich verbunden und bilden eine Parallelogrammanordnung (29), die einem Parallelogramm-Lenkermodell entspricht. Hierdurch werden Winkelfehler und ein Versatz der Elektroden (4,5) durch die elastische Verbiegung der Vorderarme (26) gemindert oder vermieden. Die Elektroden (4,5) bewegen sich im Annäherungs- und Kontaktbereich zu den mittig und etwa auf Gelenkhöhe angeordneten Werkstücken (12,13) im wesentlichen entlang einer geraden Zustellbahn, die z.B. im wesentlichen senkrecht zur beaufschlagten Werkstückoberfläche verlaufen kann.

Wie Figur 13 verdeutlicht, wird für die Stromzuführung von der Schweißstromquelle (2) zu den Elektroden (4,5) oder zu geeigneten Kontakten (39) an den elektrisch leitenden Vorderarmen (26) eine flexible und vorzugsweise induktionsarme Leitung (35) verwendet. Die Bildung von induktiven Leiterschleifen wird bei der in einem Strang geführten Leitung (35) vermieden. In der Leitung (35) laufen die Kabel (36,37) parallel und in enger Nachbarschaft, wobei sie außenseitig von einer stabilisierenden Hülle (38) umgeben sind, welche die stromführenden Kabel (36,37) gegen die durch die unterschiedliche Polung entstehenden elektromagnetischen Abstoßkräfte zusammenhält. Die Hülle (38) besteht z.B. aus einem biegeelastischen und in Umfangsrichtung zugfesten Textilmaterial und bildet durch ihre eng umschließende Anlage eine Bandage für die Kabel (36,37).

Die Leitung (35) kann zwei oder mehr Kabel (36,37) aufweisen. In Figur 16 ist eine zweiadrige Variante und in Figur 17 eine vieradrige Variante dargestellt. Bei der vieradrigen Variante sind die Kabel (36,37) in zwei Paaren mit vertauschter Polung übereinander angeordnet, wobei sich gleiche Polungen in dieser Viereckanordnung diagonal gegenüber liegen. In Abwandlung der gezeigten Ausführungsformen können mehr als vier Kabel (36,37) in einer Leitung (35) vorhanden sein und z.B. in einer Ringform mit abwechselnder Polung um einen Stützkern herum angeordnet sein.

Abwandlungen der gezeigten Ausführungsformen sind in verschiedener Weise möglich.
Zum einen können die einzelnen Gestaltungsmerkmale der Ausführungsbeispiele beliebig miteinander kombiniert oder vertauscht werden. Alternativ kann die Schweißzange (21) als C-Zange ausgestaltet sein und einen ggf. abgewinkelten festen Zangenarm sowie einen linear verschieblichen zweiten Zangenarm aufweisen. Ferner ist es möglich, einen der beiden Zangenarme (24,25) starr anzuordnen oder zu halten und nur den anderen Zangenarm zu bewegen. Variabel ist zudem die konstruktive Gestaltung und die gebogene Form der Zangenarme (24,25). Die Zangenform muss auch nicht symmetrisch sein. Auf Hinterarme (27) kann ggf. verzichtet werden, wobei der Zangenantrieb am Gelenk oder an den Vorderarmen (26) angreift.

Variabel sind ferner die Gestaltungsmöglichkeiten für die Elektroden (4,5), die z.B. schräg gegen die Werkstücke (12,13) angestellt werden können. Die Massenkonzentration im Elektrodenbereich kann auch durch eine Erhöhung der Elektrodenmasse oder Masse der Elektrodenhalter (31) erfolgen, wobei auf separate und zusätzliche Massenkörper verzichtet oder deren Umfang gemindert werden kann.

In weiterer Abwandlung der Ausführungsbeispiele von Figur 13 bis 18 kann die Schweißzange (21) mit steifen Zangenarmen (24,25) ausgerüstet sein. Auf Zusatzmassen (32,33) und auf eine Ausbildung als Masse-Schwinger-System (40) kann verzichtet werden. Dies kann insbesondere der Fall sein beim Schweißen von parallelen, insbesondere planen oder ebenen Werkstück-Kontaktflächen (18) ohne Buckel oder andere den Stromfluss konzentrierende Hilfsmittel, die sich beim Aufbringen der Anpresskraft F und beim eigentlichen Verschweißen nicht oder nur sehr wenig relativ zueinander bewegen,

Die Ausführungsform der robotergeführten Schweißeinrichtung (1) von Figur 13 bis 18 hat außerdem eigenständige erfinderische Bedeutung und kann auch mit konventionellen Elektroden sowie mit konventionell vorbereiteten Werkstücken (12,13) mit Strom konzentrierenden Mitteln, insbesondere Buckeln, Ringen oder dgl., eingesetzt werden. Das beschriebene Feder-Masse-Schwinger-System (40) mit den Zusatzmassen (32,33) hat hierfür besondere Vorteile und kann an die Buckel und deren Erweichen bzw. Einsinken angepasst sein. Für die Qualität der Schweißung ist eine Abstimmung des zeitlichen Verlaufs des Einsinkvorgangs zur Temperaturentwicklung und Erweichung durch ein entsprechend angepasstes Masse-Schwinger-System (40) günstig.

Die Elektroden (4,5) können ansonsten auch in den Ausführungsbeispielen von Figur 1 bis 12 in anderer Weise ausgebildet und angeordnet sein. Auch die Schweißeinrichtung (1) und deren Komponenten, insbesondere das Gestell (3) und die Zustelleinrichtung (20) können in anderer Weise gestaltet sein. Statt der Dreheinrichtung (6) für die Elektroden (4) kann eine Dreheinrichtung oder sonstige Bewegungseinrichtungen für die Bewegung der Werkstücke (12,13) bei angepressten Elektroden (4,5) vorhanden sein. Die Dreheinrichtung (6) kann auch entfallen.

### BEZUGSZEICHENLISTE

- 1: Schweißeinrichtung, CD-Schweißeinrichtung
- 2: Stromquelle, Impulsstromquelle, CD-Stromquelle
- 3: Gestell
- 4: Elektrode
- 5: Elektrode
- 6: Dreheinrichtung
- 7: Vorschubeinrichtung
- 8: Elektrodenschaft
- 9: Elektrodenkopf
- 10: Kontaktfläche, Elektroden-Kontaktfläche, Stromübergangsfläche
- 11: Elektrodenkappe
- 12: Werkstück, Blech
- 13: Werkstück, Blech
- 14: Halteeinrichtung
- 15: Masse, Bindemittel, Klebemittel
- 16: Auftragkörper, Raupe
- 17: Spalt
- 18: Schweißbereich, Fügebereich
- 19: Kontaktfläche, Werkstück-Kontaktfläche
- 20: Zustelleinrichtung
- 21: Schweißzange
- 22: Manipulator, Roboter
- 23: Hand, Roboterhand
- 24: Zangenarm
- 25: Zangenarm
- 26: Vorderarm
- 27: Hinterarm
- 28: Ausleger, Federarm
- 29: Parallelogrammanordnung
- 30: Gelenk
- 31: Elektrodenhalter
- 32: Zusatzmasse
- 33: Zusatzmasse
- 34: Schweißstation
- 35: Leitung, Stromleitung
- 36: Kabel
- 37: Kabel
- 38: Hülle
- 39: Kontakt
- 40: Feder-Masse-Schwinger
- 41: Schwerpunkt
- 42: geometrische Mitte
- 43: Zustellrichtung

- F: Elektrodenanpresskraft

## Patentansprüche

1. Verfahren zum elektrischen Entladungsimpulsschweißen, insbesondere zum elektrischen Kondensator-Entladungsschweißen von Werkstücken (12,13), insbesondere dünnwandigen Blechen, wobei die Schweißeinrichtung (1) mindestens eine Impulsstromquelle (2), mehrere zustellbare Elektroden (4,5) und eine Zustelleinrichtung (20) für mindestens eine Elektrode (4,5) aufweist, **dadurch gekennzeichnet, dass** die Werkstücke (12,13) im Fügebereich (18) mit im wesentlichen parallelen Kontaktflächen (19) aneinander gelegt und mit dem Entladungsstrom geschweißt werden.

2. Verfahren nach Anspruch 1, **dadurch gekennzeichnet, dass** die Werkstücke (12,13) unter Meidung von den Stromfluss konzentrierenden zusätzlichen Mitteln, insbesondere Buckeln oder Ringen, geschweißt werden.

3. Verfahren nach Anspruch 1 oder 2, **dadurch gekennzeichnet, dass** die Werkstücke (12,13) mit flächigem Berührungskontakt aneinander gelegt und geschweißt werden oder unter Bildung eines distanzierenden Spalts (17) und unter Einbringung einer verformbaren Masse (15) im Spalt (17) aneinander gelegt und unter Druck der Elektroden (4,5) und Verdrängung der Masse (15) verpresst und geschweißt werden.

4. Verfahren nach Anspruch 1, 2 oder 3, **dadurch gekennzeichnet, dass** die Werkstücke (12,13) mit mindestens einer Elektrode (4,5) mit einer verkleinerten stromführenden Kontaktfläche (10) geschweißt werden.

5. Verfahren nach einem der vorhergehenden Ansprüche, **dadurch gekennzeichnet, dass** die Werkstücke (12,13) mit einer manipulatorgeführten Schweißzange (21) geschweißt werden.

6. Schweißeinrichtung zum elektrischen Entladungsimpulsschweißen, insbesondere zum elektrischen Kondensator-Entladungsschweißen von Werkstücken (12,13), insbesondere dünnwandigen Blechen, wobei die-Schweißeinrichtung (1) mindestens eine Impulsstromquelle (2), ein Gestell (3), mehrere zustellbare Elektroden (4,5) und eine Zustelleinrichtung (20) für mindestens eine Elektrode (4,5) aufweist, **dadurch gekennzeichnet, dass** die Werkstücke (12,13) im Fügebereich (18) mit im wesentlichen parallelen Kontaktflächen (19) aneinander gelegt und mit dem Entladungsstrom geschweißt werden, wobei mindestens eine Elektrode (4,5) eine verkleinerte stromführende Kontaktfläche (10) zum Werkstück (12,13) aufweist.

7. Schweißeinrichtung nach Anspruch 6, **dadurch gekennzeichnet, dass** die Kontaktfläche (10) eine Größe von ca. 35 mm² oder kleiner, insbesondere ca. 28 mm² oder kleiner aufweist.

8. Schweißeinrichtung nach Anspruch 6 oder 7, **dadurch gekennzeichnet, dass** die Kontaktfläche (10) im wesentlichen kreisrund ist und einen Durchmesser von ca. 6 mm oder kleiner aufweist.

9. Schweißeinrichtung nach Anspruch 6 oder 7, **dadurch gekennzeichnet, dass** die Kontaktfläche (10) im Umriss prismatisch oder oval ausgebildet ist.

10. Schweißeinrichtung nach einem der Ansprüche 6 bis 9, **dadurch gekennzeichnet, dass** die Elektroden (4,5) gleich große oder unterschiedlich große Kontaktflächen (10) aufweisen.

11. Schweißeinrichtung nach einem der Ansprüche 6 bis 10, **dadurch gekennzeichnet, dass** die Schweißeinrichtung (1) als Kondensatorentladungs-Schweißeinrichtung und die Stromquelle (2) als Kondensatorentladungs-Stromquelle ausgebildet sind.

12. Schweißeinrichtung nach einem der Ansprüche 6 bis 11, **dadurch gekennzeichnet, dass** das Gestell (3) als stationäres Maschinengestell oder als instationäre Schweißzange (21) ausgebildet ist.

13. Schweißeinrichtung nach einem der Ansprüche 6 bis 12, **dadurch gekennzeichnet, dass** die Zustelleinrichtung (20) eine Vorschubeinrichtung (7) für mindestens eine Elektrode (4,5) oder einen Antrieb für mindestens einen Zangenarm (24,25) der Schweißzange (21) aufweist.

14. Schweißeinrichtung nach einem der Ansprüche 6 bis 13, **dadurch gekennzeichnet, dass** die Zustelleinrichtung (20) eine Elektrodenanpresskraft F von ca. 2 bis 4 kN oder mehr erzeugt.

15. Schweißeinrichtung nach einem der Ansprüche 6 bis 14, **dadurch gekennzeichnet, dass** die Schweißeinrichtung (1) eine Dreheinrichtung (6) für mindestens eine Elektrode (4,5) aufweist.

16. Schweißeinrichtung nach einem der Ansprüche 6 bis 15, **dadurch gekennzeichnet, dass** die Schweißeinrichtung (1) einen mehrachsigen Manipulator (22) mit einer Schweißzange (21) und eine zumindest teilweise stationäre Stromquelle (2) aufweist.

17. Schweißeinrichtung nach einem der Ansprüche 6 bis 16, **dadurch gekennzeichnet, dass** die Schweißzange (21) als X-Zange mit schwenkbar gelagerten Zangenarmen (24,25) oder als C-Zange mit einem verschieblichen Zangenarm ausgebildet ist.

18. Schweißeinrichtung nach einem der Ansprüche 6 bis 17, **dadurch gekennzeichnet, dass** die Schweißzange (21) mit federelastischen Vorderarmen (26) und mit mindestens einer Zusatzmasse (32,33) als Feder-Masse-Schwingsystem (40) zur Bewegung der Elektrode (4,5) ausgebildet ist.

19. Schweißeinrichtung nach einem der Ansprüche 6 bis 18, **dadurch gekennzeichnet, dass** für die Stromzuführung von der Stromquelle (2) zur Schweißzange (21) eine flexible und induktionsarme Leitung (35) vorgesehen ist.
